Europäisches Patentamt

European Patent Office

Office européen des brevets

(11) Numéro de publication : **0 453 335 A1**

# (12) DEMANDE DE BREVET EUROPEEN

(21) Numéro de dépôt : **91400673.9**

(22) Date de dépôt : **12.03.91**

(51) Int. Cl.⁵ : **G06F 15/40, H04N 5/445**

(30) Priorité : 16.03.90 FR 9003382

(43) Date de publication de la demande :
23.10.91 Bulletin 91/43

(84) Etats contractants désignés :
BE DE DK FR GB IT LU NL

(71) Demandeur : **LABORATOIRE EUROPEEN DE RECHERCHES ELECTRONIQUES AVANCEES**
**9, Place des Vosges La Défense 5**
**F-92400 Courbevoie (FR)**

(72) Inventeur : **Cabot, Laurent**
**THOMSON-CSF, SCPI, Cédex 67**
**F-92045 Paris la Défense (FR)**

(74) Mandataire : **Chaverneff, Vladimir et al**
**THOMSON-CSF SCPI**
**F-92045 PARIS LA DEFENSE CEDEX 67 (FR)**

(54) **Procédé de commande d'appareils d'un réseau domestique intégré, et dispositif de mise en oeuvre.**

(57)     Pour commander les différents appareils d'un réseau domestique intégré, on affiche un menu de commande sur le téléviseur (2) relié au réseau (7A, 7B, ..., 8A, 8B, ...). Ce menu comporte divers "pavés" regroupant : les fonctions les plus fréquemment utilisées, les autres fonctions, et l'appel des menus des autres appareils.

FIG.1

# PROCEDE DE COMMANDE D'APPAREILS D'UN RESEAU DOMESTIQUE INTEGRE, ET DISPOSITIF DE MISE EN OEUVRE

L'invention se rapporte à un procédé de commande d'appareils d'un réseau domestique intégré, et à un dispositif de mise en oeuvre.

Dans un réseau domestique comportant des appareils divers reliés entre eux par un réseau d'interconnexion, il est avantageux de disposer d'au moins un poste central pouvant commander le fonctionnement de tous ces appareils. Lorsque le nombre de ces appareils devient élevé, la complexité du poste de commande augmente rapidement, et l'accès à ces appareils est moins aisé.

L'invention a pour objet un dispositif pour poste de commande de réseau, en particulier de réseau domestique, permettant de simplifier l'utilisation de ce poste, même pour un grand nombre d'appareils raccordés au réseau, dispositif qui soit facile à implanter et peu onéreux.

L'invention a également pour objet un procédé de commande d'appareils d'un réseau domestique qui permette de les commander simplement et rationnellement.

Le dispositif conforme à l'invention comporte un poste de commande, un dispositif de visualisation sur un écran et un générateur de menus affichant des menus de commande sur l'écran.

Le procédé de l'invention consiste à afficher sur un écran de visualisation les identités et fonctions commandables d'un appareil à commander ainsi qu'une fonction permettant d'afficher subséquemment, lorsqu'elle est activée, l'identité et les fonctions commandables des autres appareils du réseau, toutes ces fonctions pouvant être activées à tour de rôle lorsqu'elles sont sélectionnées. De façon avantageuse, les fonctions commandables des appareils sont affichées par groupes, dans l'ordre décroissant de fréquence d'utilisation. De façon avantageuse, l'affichage est du type à menus déroulants et commandable par un dispositif à télécommande.

L'invention sera mieux comprise à la lecture de la description détaillée d'un mode de réalisation, pris à titre d'exemple non limitatif et illustré par le dessin annexé, sur lequel :

– la figure 1 est un bloc-diagramme d'un dispositif conforme à l'invention,

– la figure 2 est une vue schématique d'un écran de visualisation du dispositif de la figure 1, montrant une organisation possible des différents menus, et

– la figure 3 est une vue d'un écran de visualisation du dispositif de la figure 1 montrant un exemple d'affichage.

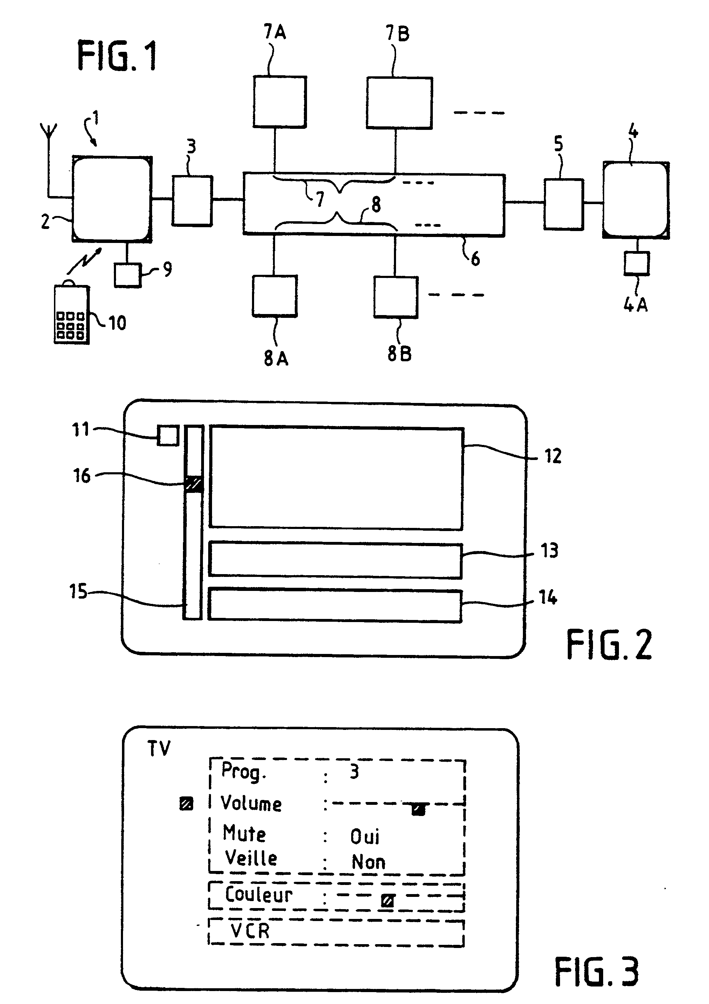

On a représenté en figure 1, un bloc-diagramme d'un réseau domestique intégré dont font partie divers appareils domestiques électroménagers (réfrigérateur, machines à laver le linge, la vaisselle, ...), électriques et électromécaniques et appareils incorporant une fonction ou une commande électrique (chauffage, chauffe-eau ...) et des appareils d'électronique de loisirs (télévision, magnétoscope, radio, ...). Ces appareils sont reliés par des conducteurs appropriés (bifilaire, paire torsadée, fibre optique, ...) à au moins un poste de commande, directement ou par l'intermédiaire d'un circuit de connexion. Bien entendu, les fonctions à commander de certains de ces appareils sont de complexités diverses : elles peuvent être très simples : marche ou arrêt (par exemple pour les appareils de chauffage) ou plus complexes (téléviseurs ou magnétoscopes : choix de la chaîne, volume du son, luminosité, contraste, ...).

Dans l'exemple du réseau de la figure 1, on a représenté un poste de commande principal 1, qui comporte un téléviseur 2 relié à une interface de commande 3, et un poste de commande secondaire 4 disposé dans une pièce éloignée de celle où se trouve le poste 1. Le poste 4 est relié au réseau par une interface 5. Le poste 4 peut être identique au poste 1 et commander tous les appareils du réseau, ou bien être plus simple que le poste 1 (par exemple il peut comporter un simple moniteur) et commander seulement une partie de ces appareils.

Les interfaces 3 et 5 sont reliées à un dispositif 6 d'interconnexion auquel sont par ailleurs reliés les appareils à commander. Ce dispositif 6 d'interconnexion peut être de tout type approprié (à matrice de relais, à commutateurs à semi-conducteurs, ...). Les entrées et/ou sorties du dispositif 6 peuvent être avantageusement groupées selon les catégories d'appareils à commander ou selon les emplacements de ces appareils. On a représenté sur la figure 1 deux tels groupes de sorties, référencés 7, 8. Des appareils 7A, 7B, . . . sont reliés aux sorties 7, et des appareils 8A, 8B sont reliés aux sorties 8.

Le poste de commande 1 comporte, outre le récepteur de télévision 2, un dispositif 9 générateur de menus et un boîtier de télécommande 10. Le dispositif 9, de type approprié, permet d'afficher sur l'écran du téléviseur 2 des menus tels que ceux représentés sur les figures 2 et 3. De façon avantageuse, le dispositif 9 est intégré au téléviseur 2. L'activation des différents menus pouvant être affichés sur l'écran du téléviseur 2 et la saisie éventuelle d'information dans les cases de ces menus sont, de préférence, commandées par le boîtier de télécommande 10. Tout autre dispositif d'activation et de saisie approprié peut être utilisé : écran tactile, souris, clavier, ...

Les menus affichés sur l'écran du téléviseur 2 ont avantageusement une conformation telle que celle représentée sur la figure 2, mais il est bien entendu que d'autres conformations de menus peuvent être mises en oeuvre, dans la mesure où elles permettent d'afficher et de pouvoir utiliser les principales fonctions symbolisées sur la figure 2. Ces principales fonctions sont : l'identification de l'appareil commandé (pavé 11), paramètres le plus souvent modifiés (pavé 12), autres paramètres (pavé 13), accès aux menus des autres appareils (pavé 14). Pour activer ces différents pavés, on peut par exemple prévoir une colonne de sélection 15 s'étendant tout le long des pavés 12 à 14. Un curseur 16 se déplace verticalement dans cette colonne 15 sous la commande de pressions successives d'un bouton de la télécommande 10. Lorsque le curseur 16 est en vis-à-vis de l'option désirée du pavé désiré, l'utilisateur appuie sur un autre bouton de la télécommande 10 pour activer ce pavé. Selon une variante, non représentée, les options ou fonctions activées sont mises en surbrillance et/ou entourées d'un cadre et/ou en couleurs différentes de celles des fonctions non activées.

La télécommande 10 comporte un bouton "OSD" ("On Screen Display" c'est-à-dire : affichage d'informations sur l'écran) qui permet généralement l'affichage sur l'écran du téléviseur d'informations rudimentaires ( changement de chaîne de réception par exemple). Dans le cas présent, une première pression sur ce bouton OSD permet l'affichage d'un menu tel que celui représenté en figure 2. Une seconde pression sur ce bouton fait quitter ce mode menu pour revenir au mode de fonctionnement normal du téléviseur.

Lorsque l'utilisateur appuie une première fois sur le bouton OSD, le menu initial affiché peut être celui relatif au téléviseur lui-même, mais il est bien entendu que ce menu initial peut correspondre à tout autre appareil du réseau domestique, moyennant un pré-réglage approprié.

Les différentes options du pavé 12 sont celles le plus fréquemment utilisées. Dans le cas du téléviseur, ce sont généralement : le numéro de chaîne, le réglage du volume du son, de la luminosité, et les fonctions "mute" (coupure du son) et " veille ".

Dans le pavé 13, on groupe les autres fonctions telles que : le contraste, la commutation mono/stéréo, le réglage graves/aiguës, et éventuellement des fonctions généralement peu accessibles à l'utilisateur : réglage de la couleur, de la convergence, ...

Dans le pavé 14, on peut, soit mettre simplement "autres appareils" pour appeler un menu donnant la liste des autres appareils, soit mettre des noms de groupes d'appareils (par exemple "électroménager" ou "chauffage"), ou, si l'on dispose de suffisamment de place, la liste des autres appareils, à raison d'un appareil par ligne. Dans tous les cas, lorsque l'on a sélectionné un autre appareil, l'écran affiche un menu semblable à celui de la figure 2.

On a représenté en figure 3, un exemple de menu pour téléviseur (TV). Les fonctions à réglage dans une plage de valeurs (réglage du son et de la luminosité, ... ) peuvent être figurées par exemple soit par des nombres arbitraires (00 à 99 par exemple) dont la valeur est proportionnelle au réglage effectué, soit, comme représenté en figure 3, par une échelle, graduée ou non, le long de laquelle se déplace un point dont la position est fonction du réglage effectué. L'affichage du programme sélectionné se fait simplement par affichage de son numéro. L'affichage des fonctions du type en tout ou rien se fait par exemple par affichage de "oui" ou "non" en face du nom de la fonction correspondante. Dans le cas de la figure 3, un magnétoscope ("VCR") est relié au téléviseur et est activé. La dernière ligne affichée est alors "VCR". Pour accéder aux commandes de ce magnétoscope, il faut faire descendre le curseur 16 jusqu'à cette dernière ligne et l'activer (en appuyant sur le bouton approprié de la télécommande 10). L'écran du téléviseur affiche alors le menu des commandes du magnétoscope, semblable au menu des commandes du téléviseur.

Ainsi, grâce à l'invention, on utilise au maximum un nombre limité de touches de commande de la télécommande 10 (ou d'un dispositif de commande similaire), en ayant un accès rapide et simple aux commandes des différents appareils du réseau.

## Revendications

1. Procédé de commande d'appareils d'un réseau domestique intégré, caractérisé par le fait qu'il consiste à afficher sur un écran de visualisation les identités (11) et fonctions commandables (12, 13) d'un appareil à commander, ainsi qu'une fonction ( 14) permettant d'afficher subséquemment, lorsqu'elle est activée, l'identité et les fonctions commandables de chacun des autres appareils du réseau, toutes ces fonctions pouvant être activées à tour de rôle lorsqu'elles sont sélectionnées ( 16 ).

2. Procédé selon la revendication 1, caractérisé par le fait qu'il consiste à afficher un menu dans lequel les fonctions à commander sont groupées en fonctions le plus fréquemment utilisées (12), en autres fonctions (13) de l'appareil dont l'identité est affichée (11), et en fonctions d'appel des menus des autres appareils (14).

3. Procédé selon l'une des revendications 1 ou 2, caractérisé par le fait que les différentes fonctions sont réparties chacune sur une ligne, un curseur (16) pouvant être affiché sur l'écran et se déplacer en face de chaque ligne.

4. Procédé selon la revendication 3, caractérisé par le fait que lorsque le curseur est positionné sur la ligne désirée, on active la fonction correspondante.

5. Dispositif de commande d'appareils d'un réseau domestique intégré, caractérisé par le fait qu'il comporte un poste de commande (1), un dispositif de visualisation (2) sur écran et un générateur de menus (9) affichant des menus de commande sur l'écran.

6. Dispositif selon la revendication 5, caractérisé par le fait que le dispositif de visualisation est un téléviseur relié au réseau par une interface de commande (3).

7. Dispositif selon la revendication 6, caractérisé par le fait que les fonctions du menu de commande sont activées à l'aide du boîtier de télécommande du téléviseur (10).

FIG.1

FIG.2

FIG.3

Within FIG.3:

TV

| Prog. | : | 3 |
| Volume | : | |
| Mute | : | Oui |
| Veille | : | Non |

Couleur : 

VCR

Office européen des brevets

# RAPPORT DE RECHERCHE EUROPEENNE

Numero de la demande

EP 91 40 0673

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 288 169 (POSSUM CONTROLS) * abrégé; colonne 7, ligne 13 - colonne 8, ligne 22; colonne 9, ligne 37 - colonne 10, ligne 46; revendications 1-5; figures 1-9 * | 1,5 | G 06 F 15/40 H 04 N 5/445 |
| A | --- | 2,6 | |
| A | WO-A-8 905 086 (ADVANCED LIGHTING SYSTEMS) * abrégé; page 2, lignes 8-20; page 4, lignes 9-32; page 5, ligne 10 - page 6, ligne 8; page 11, lignes 9-30; figures 1,2 * | 1,2,5 | |
| A | US-A-4 873 623 (LANE et al.) * abrégé; colonne 6, ligne 67 - colonne 9, ligne 21; colonne 9, lignes 52-57; revendications 1,2; figures 1,6-8; tableaux 1-4 * | 1-5 | |
| A | GB-A-2 155 714 (RCA) * abrégé; page 1, lignes 48-82; page 2, lignes 36-94; page 5, lignes 55-86; revendications 1-6; figures 1-4 * | 5,7 | DOMAINES TECHNIQUES RECHERCHES (Int. Cl.5) G 06 F 15/00 G 05 B 19/00 H 04 N 5/00 |
| A | DE-A-3 812 101 (PFEIL) * colonne 1, ligne 39 - colonne 2, ligne 19; colonne 3, ligne 15 - colonne 4, ligne 33; colonne 4, lignes 53-63; figures 1-4 * | 1-5 | |
| A | GB-A-2 141 565 (SANYO) * abrégé; page 2, lignes 17-37; page 3, lignes 34-104; figures 1-8 * | 1,5,6 | |

Le présent rapport a été établi pour toutes les revendications

| Lieu de la recherche | Date d'achèvement de la recherche | Examinateur |
|---|---|---|
| BERLIN | 29-06-1991 | BEITNER M.J.J.B. |